# EUROPÄISCHE PATENTANMELDUNG

(11) **EP 4 494 452 A1**
(43) Veröffentlichungstag der Anmeldung: **22.01.2025**
(21) Anmeldenummer: 24183576.8
(22) Anmeldetag: 21.06.2024
(51) Int. Cl.: A01F 15/07

(54) **BALLENPRESSE UND VERFAHREN ZUM BETREIBEN EINER BALLENPRESSE**

(30) Priorität: 18.07.2023 DE 102023118921
(71) Anmelder: Deere & Company, Moline, IL 61265 (US)
(72) Erfinder: Biziorek, Stéphane, Mannheim (DE); Perrotin, Frederic, Mannheim (DE)
(74) Vertreter: Stein, Stefan

(57) **Zusammenfassung**

Die Erfindung betrifft eine Ballenpresse (12), umfassend: eine Presskammer (112) zum Pressen eines Ernteguts zu einem Ballen (200), eine Wickeleinrichtung (146) zum Umwickeln des Ballens (200) mit einem Wickelmaterial während eines Wickelvorgangs, einen Sensor (148) zur Erfassung eines Schallsignals, eine mit dem Sensor (148) verbundene Steuereinheit (60). Die Steuereinheit (60) ist konfiguriert, den Wickelvorgang anhand eines Sensorsignals (300) des Sensors (148) zu charakterisieren. Die Erfindung betrifft weiter ein Verfahren zum Betreiben einer Ballenpresse (12).

## Beschreibung

Die Erfindung betrifft eine Ballenpresse gemäss dem Oberbegriff des unabhängigen Anspruchs 1 und ein Verfahren zum Betreiben einer Ballenpresse gemäss dem Oberbegriff des unabhängigen Anspruchs 10.

Ballenpressen, insbesondere Rundballenpressen oder Quaderballenpressen, werden zum Aufnehmen und Pressen von Erntegut, beispielsweise Stroh, Heu oder dergleichen eingesetzt. Die Ballenpresse kann dazu eine Aufnahmeeinheit zum Aufnehmen des Ernteguts umfassen, insbesondere zur Aufnahme des Ernteguts aus einem Schwad. Dabei kann das auf dem Boden liegende Erntegut mit der Aufnahmeeinheit, insbesondere einer Pick-up, aufgenommen werden. Die Ballenpresse kann auch eine Presskammer umfassen. Die Presskammern kann eines oder mehrere Pressmitteln umfassen. Die Presskammer kann das von der Aufnahmeeinheit aufgenommene Erntegut aufnehmen und zu einem Ballen pressen. Die Ballenpresse kann ausserdem eine Fördereinheit umfassen. Das von der Aufnahmeeinheit aufgenommene Erntegut kann mit der Fördereinheit, beispielsweise einem Rotor und/oder einem Unterboden mit Messern, geschnitten und in die Presskammer geleitet werden. Die Fördereinheit kann als Teil der Aufnahmeeinheit ausgebildet sein oder der Aufnahmeeinheit nachgeordnet sein, insbesondere in Förderrichtung nachgeordnet sein. In der Presskammer wird der Ballen, insbesondere der Rundballen oder der Quaderballen, geformt. Der fertig geformte Ballen kann im Anschluss in der Presskammer mit einem Wickelmaterial, beispielsweise Netz, Folie oder Bindegarn, umwickelt werden. Der fertig geformte Ballen oder der fertig umwickelte Ballen, kann, indem eine Auswurfeinheit, beispielsweise eine Auswurfklappe oder ein Heckteil oder eine Heckklappe der Ballenpresse, in eine geöffnete Position bewegt wird und optional über eine Rampe, oder insbesondere einen Auswerfer, entladen oder ausgeworfen werden.

Die EP 1 479 283 A1 offenbart eine Wickelvorrichtungen ausserhalb einer Ballenpresse. Die Wickelvorrichtung umfasst eine Vorrichtung zum Überwachen des Laufs von bahnförmigem Wickelmaterial zwischen zwei beabstandeten Stellen in dem Bahnlauf mittels eines Sensors. Der Sensor erkennt dabei ein typisches Geräusch beim Abziehen des Wickelmaterial und erzeugt ein Signal. Sobald das Signal fehlt, ist erkennbar, dass kein Wickelmaterial mehr vorhanden ist und der Wickelvorgang unterbrochen werden muss.

Nachteil der bekannte Vorrichtungen zur Erkennung des Wickelvorgangs ist, dass dieser entweder ausserhalb der Ballenpresse erfolgen, siehe EP 1 479 283 A1, oder auf konstruktiv aufwändige und technisch komplizierte Art und Weise mit mehreren Sensoren in der Presskammer erfolgt.

Der vorliegenden Erfindung liegt daher die Aufgabe zugrunde eine Ballenpresse und ein Verfahren zum Betreiben einer Ballenpresse vorzuschlagen, durch welche die vorgenannten Probleme überwunden werden. Insbesondere sollen eine Ballenpresse und ein Verfahren zum Betreiben einer Ballenpresse vorgeschlagen werden, die es ermöglichen den Wickelvorgang konstruktiv weniger aufwändige und/oder technisch auf einfache Art und Weise zu erkennen.

Diese Aufgabe wird durch eine Ballenpresse mit den Merkmalen des Anspruchs 1 und ein Verfahren mit den Merkmalen des Anspruchs 10 gelöst. Die abhängigen Ansprüche beziehen sich auf besonders vorteilhafte Ausführungsformen der Erfindung.

Erfindungsgemäss wird eine Ballenpresse vorgeschlagen. Die Ballenpresse umfasst eine Presskammer zum Pressen eines Ernteguts zu einem Ballen, und insbesondere zur Aufnahme eines Ernteguts, und eine Wickeleinrichtung zum Umwickeln des Ballens, insbesondere des in der Presskammer fertig geformten Ballens, mit einem Wickelmaterial in einem oder während eines Wickelvorgang(s). Die Ballenpresse umfasst weiter einen Sensor zur Erfassung eines Schallsignals, bevorzugt eines in der Ballenpresse emittierten Schallsignals, besonders bevorzugt eines während des Wickelvorgangs in der Ballenpresse emittierten Schallsignals, und eine mit dem Sensor verbundene, insbesondere signalübertragend verbundene, Steuereinheit. Die Steuereinheit ist konfiguriert den Wickelvorgang anhand eines Sensorsignals oder mehrerer Sensorsignale des Sensors zu charakterisieren.

Der Sensor kann also ein Schallsignal, insbesondere in der Ballenpresse, erfassen, insbesondere detektieren. Der Sensor kann konfiguriert sein ein Sensorsignal bereitzustellen, das eine Schallinformation des in der Ballenpresse emittierten Schallsignals, insbesondere des Wickelvorgangs, umfasst. Das Schallsignal, insbesondere das emittierte Schallsignal, kann beispielsweise Schallanteile umfassen, die durch die Vibration der Ballenpresse und/oder den durch die Wickeleinrichtung und/oder durch den Wickelvorgang emittierten Schall verursacht werden. Mit anderen Worten, mit dem Sensor können eines oder mehrere Schallsignale, insbesondere der Schall eines Wickelvorgangs in der Ballenpresse, in Form eines Sensorsignals erfassbar sein.

Der Sensor ist mit der Steuereinheit verbunden, insbesondere signalübertragend verbunden. Dadurch kann das Sensorsignal vom Sensor an die Steuereinheit gesendet werden und/oder von der Steuereinheit empfangen werden. Der Sensor kann ein Schallsignal erfassen und in Form eines elektrischen Sensorsignals bereitstellen.

Die Ballenpresse kann eine Quaderballenpresse zum Bilden von Quaderballen oder eine Rundballenpresse zum Bilden von Rundballen aus Erntegut sein. Die Ballenpresse kann einen Ballenpressenrahmen umfassen. Ebenso kann die Ballenpresse in ein Zugfahrzeug integriert sein, also die Ballenpresse als selbstfahrende Ballenpresse ausgebildet sein. Die Ballenpresse kann durch Räder auf dem Erdboden abgestützt sein. Die Presskammern kann eines oder mehrere Pressmitteln umfassen. Die Ballenpresse kann ausserdem eine Fördereinheit umfassen. Mit der Presskammer kann der Ballen, insbesondere in einer Pressphase, geformt werden. Die Ballenpresse kann eine Aufnahmeeinheit, insbesondere eine Pick-up, zum Aufnehmen von Erntegut vom Boden umfassen, und insbesondere zur Aufnahme des Ernteguts eines Schwads. Die Aufnahmeeinheit kann ausserdem zur Zufuhr des aufgenommenen Ernteguts in die Presskammer ausgebildet sein.

Die Ballenpresse umfasst eine Wickeleinrichtung zum Umwickeln des Ballens, insbesondere des fertig geformten Ballens, mit einem Wickelmaterial. Das Wickelmaterial kann beispielsweise Netz, Folie oder Bindegarn sein. Der fertig geformte Ballen kann in oder während eines Wickelvorgangs, insbesondere in der Presskammer, mit dem Wickelmaterial umwickelt werden.

Die Ballenpresse kann die Auswurfeinheit, beispielsweise eine Auswurfklappe oder ein Heckteil oder eine Heckklappe der Ballenpresse, umfassen. Der fertig geformte Ballen oder der fertig umwickelte Ballen, kann, wenn die Auswurfeinheit in der zweiten Position ist, also die Presskammer geöffnet ist, entladen oder ausgeworfen werden. Die Auswurfeinheit kann schwenkbar an der Ballenpresse, insbesondere dem Ballenpressenrahmen oder einem Gehäuseteil, angeordnet, bevorzugt mit dieser oder diesem verbunden und/oder an diesem befestigt und/oder getragen sein, besonders bevorzugt schwenkbar gelagert sein. Die Ballenpresse kann mit einer größenveränderlichen Presskammer bzw. als Ballenpresse mit variabler Presskammer ausgebildet sein. Die Ballenpresse mit größenveränderlichen Presskammer kann eines oder mehrere Pressmittel umfassen, wobei das Pressmittel insbesondere als Riemen oder Gurt oder Kettenanordnung oder Band ausgebildet sein kann. Ebenso kann die Ballenpresse auch eine größenunveränderliche Presskammer umfassen. Hierbei kann ein Pressmittel als weine oder mehrere Pressrolle ausgebildet sein, die insbesondere als zueinander parallel verlaufender Pressrollen zum Pressen des Ernteguts angeordnet sind. Die Rotationsachsen der Pressrollen können bei geschlossener Auswurfeinheit auf einem Kreisbogen liegen und wenigstens eine der Pressrollen kann angetrieben sein. Die Anordnung der Pressrollen in der Presskammer kann einer Zylinderform entsprechen, sodass die Pressrollen zylindrisch um den Rundballen angeordnet sind und eine zylindrische Umfangsfläche ausbilden. Die Presskammer kann am Ballenpressenrahmen angeordnet, bevorzugt mit diesem verbunden und/oder an diesem befestigt sein. Die Aufnahmeeinheit zur Aufnahme oder zum Sammeln von Erntegut, das auf einem Feld, also Boden liegt, und/oder zum Befördern des Ernteguts in die Presskammer kann ebenfalls am Ballenpressenrahmen angeordnet, bevorzugt mit diesem verbunden und/oder an diesem befestigt sein.

Die Ballenpresse kann einen Aktuator, beispielsweise einen ersten Aktuator umfassen. Der Aktuator kann zum Einstellen und/oder Verstellen der Auswurfeinheit, beispielsweise der Auswurfklappe oder ein Heckteil oder eine Heckklappe der Ballenpresse, ausgebildet und/oder eingerichtet sein. Mit dem Aktuator kann die Auswurfeinheit der Ballenpresse einstellbar und/oder verstellbar sein. Die Steuereinheit kann über eine Ventilanordnung mit dem Aktuator verbunden sein. Der Aktuator kann beispielsweise in Form eines Hydraulikzylinders oder Pneumatikzylinders oder Hebekissens oder Gewindetriebs oder Zahnstangentriebs oder Elektrozylinders ausgebildet sein. Der Aktuator kann einen Endes, beispielsweise mit dem Kolben, mit der Auswurfeinheit, und anderen Endes, beispielsweise mit oder dem Zylinder, an der Ballenpresse, beispielsweise am Ballenpressenrahmen oder Gehäuse, verbunden sein, insbesondere befestigt und/oder angelenkt sein. Ebenso kann der Aktuator auch umgekehrt befestigt oder angelenkt sein. Der Aktuator kann mit der Steuereinheit derart ansteuerbar sein, dass die Auswurfeinheit zwischen einer ersten Position, in der die Presskammer geschlossen ist, insbesondere die Auswurfeinheit die Presskammer verschliesst, und einer zweiten Position bewegbar ist, in der die Presskammer geöffnet ist, insbesondere der Ballen ausgeworfen werden kann. Der Aktuator kann mit der Steuereinheit auch derart ansteuerbar sein, dass die Auswurfeinheit jede Position zwischen der ersten und zweiten Position einnehmen kann.

Die Ballenpresse kann einen oder mehrere Ballensensoren zur Erfassung einer Grösse des Ballens, beispielsweise ein Volumen oder Durchmesser oder den Radius des Ballens, und/oder eine Spannung der Pressmittel und/oder eine Verteilung des Ernteguts umfassen, insbesondere eine seitliche Verteilung des Ernteguts. Der oder die Ballensensoren können die Grösse des Ballens und/oder eine Spannung der Pressmittel oder eine Verteilung des Ernteguts in Form eines Ballensignals erfassen. Der oder die Ballensensoren können an oder in der Presskammer und/oder der Aufnahmeeinheit, angeordnet sein. Der oder die Ballensensoren können beispielsweise über eine Breite der Presskammer und/oder der Aufnahmeeinheit verteilt sein, um insbesondere eine gleichmäßige Verteilung des Ernteguts in der Presskammern und somit gleichförmige Ballen zu erhalten. Der oder die Ballensensoren können mit der Steuereinheit verbunden sein. Das Ballensignal kann von dem oder den Ballensensoren an die Steuereinheit gesendet bzw. von der Steuereinheit von dem oder den Ballensensoren empfangen werden. Die Steuereinheit kann das Auswurfsignal generieren, wenn die Steuereinheit das Ballensignal empfängt.

Wesentlich für die Erfindung ist, dass die Steuereinheit konfiguriert ist, den Wickelvorgang anhand eines oder mehrerer Sensorsignale des Sensors zu charakterisieren. Mit anderen Worten, die Ballenpresse kann mit der Steuereinheit derart betreibbar sein, dass diese mit oder anhand des Sensorsignals den Wickelvorgang charakterisieren kann. Unter charakterisieren kann dabei verstanden werden, dass beispielsweise der Wickelvorgang qualitativ und/oder quantitativ und/oder der Verlauf des Wickelvorgangs, d.h. ordnungsgemäss oder fehlerbehaftet, anhand des Sensorsignals, des Sensorsignals oder der Sensorsignale in Abhängigkeit von der Zeit, beurteilt werden kann. Dazu können Amplitude und/oder Frequenz des Schallsignals insbesondere anhand der Amplitude und/oder der Frequenz, des Sensorsignals ermittelt, insbesondere berechnet und/oder analysiert werden. Dadurch kann vorteilhafterweise der Wickelvorgang konstruktiv weniger aufwändige erkannt werden, da lediglich ein Sensor zu Erfassung des Schall benötigt wird, um den Wickelvorgang zu charakterisieren. Von Vorteil ist darüber hinaus, dass auf technisch einfache Art und Weise erkannt werden kann, ob und wie der Wickelvorgang verlaufen ist.

In Ausgestaltung der Erfindung ist die Steuereinheit konfiguriert, eine Amplitude und/oder eine Frequenz des Sensorsignals zu ermitteln, und den Wickelvorgang mit oder anhand der Amplitude und/oder der Frequenz zu charakterisieren. Ebenso kann die Steuereinheit konfiguriert sein die Amplitude und/oder die Frequenz des Sensorsignals mit einem Schwellwert zu vergleichen, insbesondere zu ermitteln, ob die Amplitude und/oder die Frequenz über einem Schwellwert liegen und/oder die Anzahl der Amplituden oder Frequenzen über dem Schwellwert ermitteln. Jede Amplitude, insbesondere über dem Schwellwert, kann dabei einem Umwicklungsdurchgang um den Ballen mit Wickelmaterial entsprechen. Die Anzahl der Amplituden über dem Schwellwert kann der Anzahl der Umwicklungsschritte entsprechen. Vorteilhafterweise kann anhand der Amplitude und/oder der Frequenz des Sensorsignals und/oder der Amplitude über dem Schwellwert der Beginn des Wickelvorgangs und/oder die Anzahl der der Umwicklungsdurchgänge, insbesondere also eine Anzahl an Lagen von Wickelmaterial auf dem Ballen ermittelt werden.

In Ausgestaltung der Erfindung ist das Schallsignal oder sind die Schallsignale in Abhängigkeit von der Zeit erfassbar. Die Steuereinheit kann konfiguriert sein den Wickelvorgang anhand eines Sensorsignals oder mehrerer Sensorsignale des Sensors in Abhängigkeit von der Zeit zu charakterisieren. Im Weiteren kann die Steuereinheit konfiguriert sein eine oder mehrere Amplituden und/oder Frequenzen des Sensorsignals oder der Sensorsignale in Abhängigkeit von der Zeit zu ermitteln und/oder die Amplituden und/oder Frequenzen der Sensorsignale in Abhängigkeit von der Zeit mit einem oder dem Schwellwert zu vergleichen. Aufgrund der Erfassung des Schallsignals in Abhängigkeit von der Zeit kann mit dem Sensorsignal die obige Charakterisierung des Wickelvorgangs, insbesondere des Verlaufs und/oder mit den Amplituden und/oder Frequenzen die Qualität und Quantität des Wickelvorgangs beurteilt werden.

In Ausgestaltung der Erfindung ist die Steuereinheit konfiguriert, das Sensorsignal zu filtern und/oder zu bearbeiten. Dabei können die Amplitude(n) und/oder Frequenz(en) mit Filtern verändert und/oder bearbeitet werden. Im Speziellen kann das Sensorsignal, insbesondere können das oder die Sensorsignale in Abhängigkeit von der Zeit, mit einer Fourier-Transformation verarbeitet und/oder Hoch-Pass- und/oder Tiefpassfilter auf die Signale oder deren Fourier-Transformierte angewendet werden. Dadurch können die Amplitude(n) und/oder die Frequenz(en) auf einfach Art und Weise anhand des oder der Sensorsignale, insbesondere der Sensorsignale in Abhängigkeit von der Zeit, ermittelt werden.

In Ausgestaltung der Erfindung ist die Steuereinheit konfiguriert, in Abhängigkeit vom oder mit dem Sensorsignal, insbesondere in Abhängigkeit von oder mit der Amplitude und/oder der Anzahl der Amplituden über dem Schwellwert, ein Fehlersignal oder ein Fertigstellungssignal zu generieren und/oder zu versenden. Zusätzlich oder alternativ kann die Steuereinheit konfiguriert sein, in Abhängigkeit von oder mit der oder den Frequenz(en) und/oder der Anzahl der Frequenzen über dem Schwellwert, ein Fehlersignal oder ein Fertigstellungssignal zu generieren und/oder zu versenden. Das Fehlersignal kann generiert oder versendet werden, beispielsweisen wenn keine Amplitude und/oder Frequenz über dem Schwellwert ist und/oder die Anzahl der Amplituden und/oder Frequenzen über dem Schwellwert, insbesondere also die Anzahl der Lagen an Umwicklungsmaterial auf dem Ballen oder die ermittelte Anzahl an Umwicklungsdurchgängen zu gering ist. Das Fertigstellungssignal kann generiert oder versendet werden, beispielsweisen wenn die Amplitude und/oder Frequenz über dem Schwellwert ist und/oder die Anzahl der Amplituden und/oder Frequenzen über dem Schwellwert, insbesondere also die Anzahl der Lagen an Umwicklungsmaterial auf dem Ballen und/oder die ermittelte Anzahl an Umwicklungsdurchgängen ausreichend hoch ist, bevorzugt mindestens 2 Lagen und/oder Umwicklungsdurchgänge, besonders bevorzugt mindestens 4 Lagen und/oder Umwicklungsdurchgänge.

In Ausgestaltung der Erfindung ist der Sensor an der Presskammer und/oder an der Wickeleinrichtung und/oder an einem Ballenpressenrahmen der Ballenpresse angeordnet, bevorzugt mit diesen verbunden oder an diesen befestigt. Der Sensor kann insbesondere kontaktlos, also ohne die Presskammer oder die Wickeleinrichtung oder den Ballenpressenrahmen zu berühren, mit diesen verbunden oder an diesen befestigt sein. Der Sensor kann ein Schallsensor, insbesondere ein Mikrophon oder ein Ultraschallsensor sein. Dadurch kann das in der Ballenpresse emittierte Schallsignal auf einfach Art und Weise erfasst werden.

In Ausgestaltung der Erfindung ist die Steuereinheit konfiguriert, den Wickelvorgang anhand eines den Wickelvorgang repräsentierenden Modells in Abhängigkeit vom Sensorsignals des Sensors, insbesondere von dem oder den Sensorsignale(n) in Abhängigkeit von der Zeit zu charakterisieren. Das Modell kann dabei eine softwaremäßige Darstellung oder Simulation oder eine Funktion, insbesondere ein Verlaufs des Schallsignal, des Wickelvorgangs sein. Mittels Ausgleichungsrechnung können die Parameter der Funktion bestimmt oder geschätzt werden. Im Weiteren kann die Steuereinheit konfiguriert sein, die Amplitude(n) und/oder die Frequenz(en) anhand des den Wickelvorgang repräsentierenden Modells, insbesondere der Funktion des Wickelvorgangs, zu ermitteln, insbesondere zu berechnen. Die Steuereinheit kann weiter konfiguriert sein, die Amplitude(n) und/oder die Frequenz(en) mit einem oder dem Schwellwert zu vergleichen und/oder die Anzahl an Amplituden, insbesondere über dem Schwellwert, zu ermitteln. Jeder Amplitude des Modells kann dabei einem Umwicklungsdurchgang um den Ballen mit Wickelmaterial entsprechen. Die Anzahl der Amplituden über dem Schwellwert kann der Anzahl der Umwicklungsschritte entsprechen. Die Steuereinheit kann ausserdem konfiguriert sein, das Modell mit den vom Sensor erfassten Schallsignalen, insbesondere in Abhängigkeit von der Zeit, des Wickelvorgangs anzupassen und/oder zu verbessern.

Die Erfindung betrifft weiter ein Verfahren zum Betreiben bzw. Betrieb einer Ballenpresse, insbesondere einer Ballenpresse nach mindestens einem der Ansprüche 1 bis 9.

Das Verfahren umfasst die Schritte:
- Wickeln eines Ballens mit einem Wickelmaterial, insbesondere in einer Presskammer in einem Wickelvorgang oder während eines Wickelvorgangs mit einer Wickeleinrichtung,
- Erfassung eines Schallsignals, insbesondere in der Ballenpresse, durch einen Sensor,
- Charakterisieren des Wickelvorgangs, insbesondere durch eine Steuereinheit, mit einem Sensorsignal des Sensors bzw. wobei der Wickelvorgang mit einem Sensorsignal des Sensors charakterisiert wird.

Mit anderen Worten, Bereitstellen eines Sensorsignals, das ein erfasstes Schallsignal, insbesondere in der Ballenpresse, und/oder eine Schallsignalinformation, in der Ballenpresse, umfasst, durch einen Sensor und Bereitstellen eines Sensorsignals durch den Sensor sowie Charakterisieren des Wickelvorgangs, insbesondere durch eine Steuereinheit, mit dem Sensorsignal des Sensors. Das Verfahren weist alle Vorteile und Funktionen der oben genannten erfindungsgemässen Ballenpresse auf. Das Verfahren kann ausserdem umfassen, Aufnehmen und Pressen eines Ernteguts durch eine und/oder in einer Presskammer. Ebenso kann das Verfahren umfassen, dass eine Amplitude des Sensorsignals ermittelt wird, und der Wickelvorgang mit der Amplitude charakterisiert wird und/oder die Amplitude des Sensorsignals mit einem Schwellwert verglichen wird.

Der oder die Sensoren und/oder die Ein- und Ausgabeeinheit und/oder alle weiteren Sensoren, beispielsweise der oder die Ballensensoren, Wickelsensoren und/oder ein Auswurfklappensensor können mit der Steuereinheit betreibbar, bevorzugt ansteuerbar und/oder steuerbar und/oder regelbar, besonders bevorzugt einstellbar und/oder verstellbar sein. Die Steuereinheit kann der Ballenpresse zugeordnet sein. Im Speziellen kann, wenn die Ballenpresse Teil einer Kombination aus einem Zugfahrzeug, beispielsweise ein Traktor oder Schlepper ist, die Steuereinheit dem Zugfahrzeug oder beiden gemeinsam zugeordnet und/oder an oder in diesen angeordnet sein. Die Kombination, insbesondere das Zugfahrzeug oder die Ballenpresse oder beide gemeinsam, kann bzw. können die Steuereinheit umfassen. Ebenso kann die Steuereinheit als Zugfahrzeugsteuereinheit und/oder Ballenpressensteuereinheit ausgebildet sein.

Die Steuereinheit kann als ein elektronisches Modul, ein eingebettetes System, eine Recheneinheit, ein Computer, als ein Modul zum Steuern und/oder Regeln der Ballenpresse, bevorzugt der Kombination, also des Zugfahrzeugs und/oder der Ballenpresse, ausgebildet sein. Die Steuereinheit kann einen Prozessor, einen Speicher und/oder alle Software, Hardware, Algorithmen, Anschlüsse, insbesondere auch Sensoren, umfassen, die für die Steuerung und/oder Regelung der Ballenpresse erforderlich sind. Das Verfahren kann als Programm oder Algorithmus ausgebildet sein, welches auf und/oder mit der Steuereinheit ausführbar ist. Die Steuereinheit kann jedes Gerät umfassen, das Daten von verschiedenen Sensoren analysieren, Daten vergleichen und die erforderlichen Entscheidungen treffen kann, um den Betrieb der Ballenpresse und die erforderlichen Aufgaben zur Steuerung und/oder Regelung des Betriebs der Ballenpresse zu steuern und/oder zu regeln und/oder auszuführen.

Die Steuereinheit kann mit den Bauteilen der Kombination, also insbesondere dem Sensor und/oder der Ein- und Ausgabeeinheit und/oder allen weiteren Sensoren verbunden sein, beispielsweise der oder die Ballensensoren, Wickelsensoren und/oder der Auswurfklappensensor, bevorzugt signalverbunden und/oder signalübertragend und/oder datenleitend verbunden sein. Unter einer signalverbundenen und/oder signalübertragenden und/oder datenleitenden Verbindung kann dabei unter anderem verstanden werden, dass ein Austausch von Signalen und/oder Daten zwischen den verbundenen Bauteilen stattfindet. Signale und/oder Daten können beispielsweise von der Steuereinheit empfangen und versendet werden und/oder verarbeitet und/oder bearbeitet werden. Mit anderen Worten, die Steuereinheit ist konfiguriert, Signale und/oder Daten vom Sensor und/oder der Ein- und Ausgabeeinheit und/oder allen weiteren Sensoren, beispielsweise der oder die Ballensensoren, Wickelsensoren und/oder der Auswurfklappensensor, zu empfangen und an diese zu versenden. Ebenso kann die Steuereinheit konfiguriert sein Daten und Signale zu verarbeiten und/oder zu bearbeiten.

Die Verbindung zwischen der Steuereinheit und den Bauteilen der Ballenpresse, insbesondere der Kombination, kann kabelgebunden, insbesondere also mit Kabel, und/oder kabellos, also per Funk, beispielsweise mit Bluetooth oder WLAN realisiert sein. Der Kommunikationsbus kann beispielsweise Isobus, CAN-Bus oder ähnliches sein kann. Die Steuereinheit kann unmittelbar mit der in einer Kabine des Zugfahrzeugs angeordneten Ein- und Ausgabeeinheit Verbindung stehen, durch welche von einer Bedienperson eingegebene Daten an die Steuereinheit übertragen oder von dieser empfangen und ausgegeben werden können. Denkbar ist aber auch, dass die Steuereinheit mittelbar durch eine übergeordnete Steuereinheit mit der Ein- und Ausgabeeinheit verbunden ist. Die Steuereinheit kann in die Ein- und Ausgabeeinheit integriert sein, oder umgekehrt.

Im Folgenden werden die Erfindung sowie weitere Vorteile und vorteilhafte Weiterbildungen und Ausgestaltungen der Erfindung sowohl in apparativer als auch in verfahrenstechnischer Hinsicht anhand von Ausführungsbeispielen und unter Bezugnahme auf die Zeichnung näher erläutert. Dabei sind hinsichtlich ihrer Funktion übereinstimmende bzw. vergleichbare Bauteile mit denselben Bezugszeichen gekennzeichnet. Die Zeichnungen zeigen:
- Fig. 1: eine schematische Darstellung einer erfindungsgemässen Ballenpresse, und
- Fig. 2: ein schematisches Flussdiagramm des erfindungsgemässen Verfahrens, und
- Fig. 3: eine schematische Darstellung des Verlaufs des Sensorsignals vor und während des Wickelvorgangs.
- Fig. 4: eine Darstellung des Verlaufs des Sensorsignals vor und während des Wickelvorgangs.

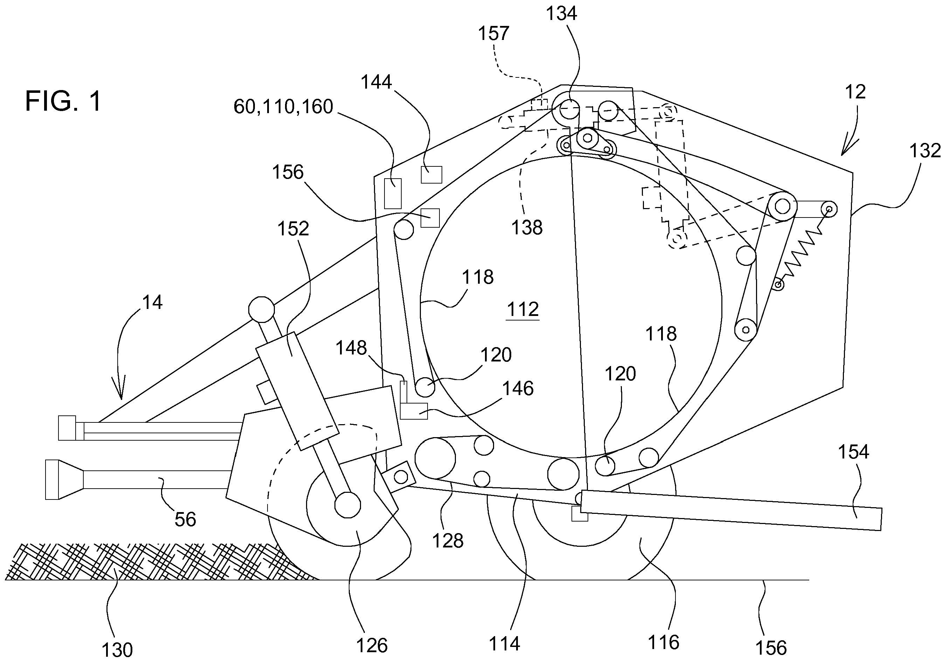

Figur 1 zeigt eine schematische Darstellung einer erfindungsgemässen Ballenpresse 12. Die Ballenpresse 12 umfasst eine Aufnahmeeinheit 126 zur Aufnahme von Erntegut und eine Presskammer 112, um das aufgenommene Erntegut zu einem Ballen 200 zu formen bzw. zu pressen. Die Ballenpresse 12 umfasst eine Steuereinheit 60. Die Ballenpresse 12 kann einen Ballenpressenrahmen 114 umfassen. Der Ballenpressenrahmen 114 kann auf Rädern 116 getragen sein. Die Presskammer 112 kann am oder auf dem Ballenpressenrahmen 114 angeordnet, bevorzugt mit diesem verbunden und/oder an diesem befestigt und/oder getragen sein.

Die Ballenpresse 12 ist mit einer größenveränderlichen Presskammer 112 bzw. als Ballenpresse 12 mit variabler Presskammer 112 ausgebildet. Das Pressmittel 118 ist als Band oder Riemen ausgebildet. Das Pressmittel 118 umgibt die Presskammer 112 und ist mit Rollen 120 geführt. Die Ballenpresse 12 kann aber auch eine größenunveränderliche Presskammer umfassen. Hierbei kann das Pressmittel 112 als eine oder mehrere Pressrollen ausgebildet sein, insbesondere eine Vielzahl zueinander parallel verlaufender Pressrollen zum Pressen des Ernteguts.

Die Aufnahmeeinheit 126, insbesondere in Form einer Pick-up, ist an der Ballenpresse 12 angeordnet und/oder mit dieser verbunden, insbesondere unterhalb der Vorderkante der Ballenpresse 12. Die Aufnahmeeinheit 126 kann sich um eine Querachse bewegenden oder drehenden Zinken umfassen. Der Aufnahmeeinheit 126 kann in einer Erntegutflussrichtung eine Fördereinheit, vorliegend ein Förderband 128, der Ballenpresse 12 folgen. Das Förderband 128 könnte auch durch einen Rotor (nicht gezeigt) ersetzt werden, oder ein Rotor könnte in Gutflussrichtung zwischen der Aufnahmeeinheit 126 und dem Förderband 128 eingefügt werden. Anstelle der Aufnahmeeinheit 126, insbesondere der Pick-up, könnten auch andere geeignete Erntegutaufnahmemittel wie Mäh- und Fördereinheiten verwendet werden.

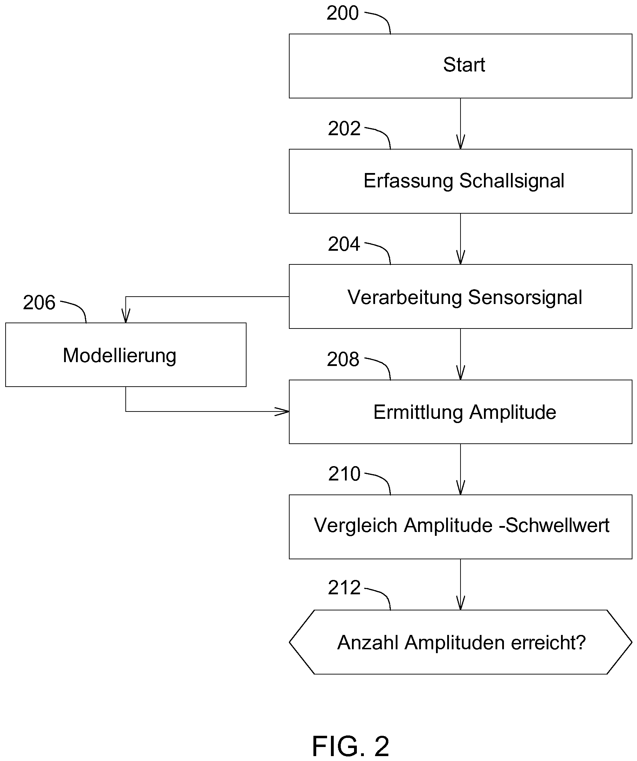

Die Aufnahmeeinheit 126 sammelt Erntegut, das insbesondere in einer Schwade 130 beispielsweise aus Gras, Heu oder Stroh, auf dem Feld liegt, und führt es der Presskammer 112 zu. Die Pressmittel 118, insbesondere eines oder mehrere Bänder oder Gurte, können während eines Ballenpressvorgangs in ihrer Längsrichtung in Bewegung versetzt werden, indem eine oder mehrere der Rollen 120 rotierend angetrieben werden. Das in die Presskammer 112 eingeführte Erntegut dreht sich somit auch während des Pressens. Während des Pressenvorgangs nimmt die Größe der Presskammer 112 mit der Zeit zu. Die Ballenpresse 12 umfasst eine Auswurfeinheit 132, beispielsweise eine Auswurfklappe oder ein Heckteil oder eine Heckklappe der Ballenpresse. Die Auswurfeinheit 132 ist schwenkbar an der Ballenpresse 12, insbesondere dem Ballenpressenrahmen 114 oder einem Gehäuseteil, gelagert. Die Auswurfeinheit 132 ist um eine Achse 134 schwenkbar, die sich quer zur Vorwärtsrichtung eines Zugfahrzeugs 10 (siehe Figur 2) und/oder der Ballenpresse 12 erstreckt. Die Auswurfeinheit 132 ist zwischen einer ersten Position, in der die Presskammer 112 geschlossen ist, und einer zweiten Position bewegbar, in der die Presskammer 112 zum Entladen des Ballens geöffnet ist. Ausserdem kann die Ballenpresse 12 eine Rampe 154 umfassen, um den Ballen 200 auf den Boden 156 abzulegen.

Die Steuereinheit 60 ist mit einem Aktuator 138 verbunden. Der Aktuator 138 kann beispielsweise in Form eines Pneumatikzylinders oder Hebekissens oder Gewindetriebs oder Zahnstangentriebs oder Elektrozylinders ausgebildet sein. Der Aktuator 138 ist vorliegend als Hydraulikzylinder ausgebildet. Die Steuereinheit 60 kann insbesondere über eine Ventilanordnung 80, insbesondere eine erste Ventilanordnung, mit dem Aktuator 138 verbunden sein. Die Auswurfeinheit 132 ist mit dem Aktuator 138 zwischen der ersten Position, in der die Presskammer 112 geschlossen ist, und der zweiten Position bewegbar, in der die Presskammer 112 zum Entladen des Ballens geöffnet ist. Der Aktuator 138 in Form eines Hydraulikzylinders ist mit einem Ende mit der Ballenpresse 12, beispielsweise mit dem Ballenpressenrahmen 114 bzw. dem Gehäuse, und mit einem zweiten Ende mit der Auswurfeinheit 132 verbunden, insbesondere schwenkbar befestigt. Die Auswurfeinheit 132 kann aber auch schwenkbar angelenkt, also an einem Angelpunkt schwenkbar befestigt sein. Der Aktuator 138 kann mit der Auswurfeinheit 132 derart verbunden sein, dass er die Auswurfeinheit 132 um die Achse 134 nach oben (in Fig. 1 gegen den Uhrzeigersinn) schwenken kann, sodass der Ballen 200 aus der Presskammer 112 auswerfbar ist. Die Auswurfeinheit 132 kann also mit dem Aktuator 138 geöffnet oder geschlossen bzw. angehoben und abgesenkt werden. Der Aktuator 138 kann mit der Steuereinheit 60 mit oder über die Ventilanordnung 80, beispielsweise über eine elektromagnetische oder eine hydraulische Ventilanordnung, eingestellt und/oder verstellt, insbesondere gesteuert und geregelt werden. Die Ventilanordnung 80 kann dabei mit der Steuereinheit 60 eingestellt und/oder verstellt, insbesondere gesteuert und geregelt werden. Ein Auswurfklappensensor 157 kann beispielsweise die Position des Aktuators 138 oder der Auswurfeinheit 132 erfassen.

Die Ballenpresse 12 umfasst eine Wickeleinrichtung 146 zum Umwickeln des Ballens mit einem Wickelmaterial während eines Wickelvorgangs. Die Wickeleinrichtung 146 kann an, insbesondere in der Nähe, der Presskammer 112 angeordnet sein. Die Wickeleinrichtung 146 kann mit der Steuereinheit 60 verbunden sein und, sobald diese von der Steuereinheit 60 dazu angewiesen wird, ein Wickelmaterial wie Garn, Band, Netz oder Verpackungsbogen an die Presskammer 112 abgeben. Der rotierende Ballen 200 kann an dem Wickelmaterial ziehen oder dieses einfangen, so dass es dann um den Ballen 200 gewickelt wird.

Die Ballenpresse 12 kann einen Sensor 148 zur Erfassung eines Schallsignals umfassen. Der Sensor 148 ist mit der Steuereinheit 60 verbunden. Wesentlich für die erfindungsgemässe Ballenpresse 12 ist, dass die Steuereinheit 60 konfiguriert ist, den Wickelvorgang anhand eines Sensorsignals des Sensors 148 zu charakterisieren. Der Sensor 148 kann also mit der Wickeleinrichtung 146 interagieren und den Wickelvorgang erfassen.

Die Ballenpresse 12 kann einen Ballensensor 144 umfassen, um die Grösse eines Ballens in der Presskammer 112 zu erfassen bzw. mit dem eine Grösse eines Ballens erfasst wird. Die Steuereinheit 60 kann mit dem Ballensensor 144 verbunden, bevorzugt signalverbunden und/oder signalübertragend und/oder datenleitend verbunden sein. Die Steuereinheit 60 kann mit dem Ballensensor 144 beispielsweise mittels eines Kabels, insbesondere mit einem lösbaren Stecker, oder über eine Funkverbindung verbunden sein. Der Ballensensor 144 kann an oder in der Presskammer 112 angeordnet sein, insbesondere in dieser befestigt. Der Ballensensor 144 kann beispielsweise den Abstand zur Ballenoberfläche bzw. zu dem an der Ballenoberfläche anliegendem Pressmittel 118 erfassen und so Auskunft über die Grösse des Ballens geben, insbesondere den Radius und/oder den Ballendurchmesser. Die von den Ballensensor 144 erfasste Grösse des Ballens oder die Ballenform kann dem Bediener auf der Ein- und Ausgabeeinheit 74 angezeigt werden.

Die Aufnahmeeinheit 126 kann beispielsweise mit einem weiteren oder dritten Aktuator 152, hier in Form eines Hydraulikzylinders, angehoben und abgesenkt werden. Der weitere Aktuator 152 kann mit der Steuereinheit 60, beispielsweise über die Ventilanordnung 80 oder eine weitere oder dritte Ventilanordnung (nicht dargestellt), eingestellt und/oder verstellt, insbesondere gesteuert und geregelt werden. Die weitere Ventilanordnung kann beispielsweise eine hydraulische oder elektromagnetische Ventilanordnung sein. Die weitere Ventilanordnung kann mit der Steuereinheit 60 eingestellt und/oder verstellt, insbesondere gesteuert und geregelt werden.

Figur 2 zeigt ein schematisches Flussdiagramm des erfindungsgemässen Verfahrens, insbesondere wie die Steuereinheit 60 arbeitet und den Ablauf des Verfahrens. Die in Figur 2 gezeigte Arbeitsweise ist mit der in Figur 1 gezeigten Ballenpresse 12 durchführbar, wobei im Folgenden lediglich auf Details und/oder Unterschiede zu

Figur 1 eingegangen wird. Nach dem Start im Schritt 200 folgt der Schritt 202, in dem mit dem Sensor 148 ein Schallsignal in der Ballenpresse 12 erfasst wird. Dabei wird der Wickelvorgang anhand eines Sensorsignals des Sensors 148 charakterisiert. Im Speziellen werden die Schallsignale in Abhängigkeit von der Zeit erfasst. Dabei kann der Wickelvorgang anhand der Sensorsignale des Sensors 148 in Abhängigkeit von der Zeit charakterisiert werden. Unter charakterisieren kann verstanden werden, dass der Wickelvorgangs von den Sensorsignalen, insbesondere von den Sensorsignalen in Abhängigkeit von der Zeit, erfasst und/oder wiedergegeben wird. In einem optionalen Schritt 204 kann das Sensorsignal, insbesondere können die Sensorsignale in Abhängigkeit von der Zeit, gefiltert und/oder bearbeitet werden, insbesondere seine Amplitude verändert werden. Im Speziellen kann das Sensorsignal, insbesondere können die Sensorsignale in Abhängigkeit von der Zeit, mit einer Fourier-Transformation verarbeitet und/oder Hoch-Pass- und/oder Tiefpassfilter auf die Signale oder deren Fourier-Transformierte angewendet werden. In einem optionalen Schritt 206 kann der Wickelvorgang anhand eines den Wickelvorgang repräsentierenden Modells in Abhängigkeit vom Sensorsignal des Sensors, insbesondere von den Sensorsignale in Abhängigkeit von der Zeit, charakterisiert werden. Das Modell kann dabei eine softwaremäßige Darstellung oder Simulation oder eine Funktion des Wickelvorgangs sein. Mittels Ausgleichungsrechnung die können die Parameter der Funktion bestimmt oder geschätzt werden. In einem optionalen Schritt 208 kann oder können die Amplituden des Sensorsignals, insbesondere der Sensorsignale in Abhängigkeit von der Zeit, und/oder die Amplituden der Fourier-Transformierten des Sensorsignals, insbesondere der Sensorsignale in Abhängigkeit von der Zeit, ermittelt werden. Ebenso können die Amplituden anhand des den Wickelvorgang repräsentierenden Modells ermittelt werden. In einem weiteren optionalen Schritt 210 können die Amplitude des Sensorsignals, insbesondere die Amplituden des Sensorsignals in Abhängigkeit von der Zeit und/oder Amplituden des den Wickelvorgang repräsentierenden Modells mit einem Schwellwert verglichen werden. In einem weiteren optionalen Schritt 212 wird in Abhängigkeit vom Sensorsignal ein Fehlersignal oder ein Fertigstellungssignal generiert und/oder versendet. Ebenso kann das Fehlersignal oder Fertigstellungssignal in Abhängigkeit von der Anzahl der Amplituden über dem Schwellwert generiert oder versendet werden. Dabei kann jede Amplitude, insbesondere über dem Schwellwert, einem Umwicklungsdurchgang, also einer Lage Wickelmaterial auf dem Ballen entsprechen.

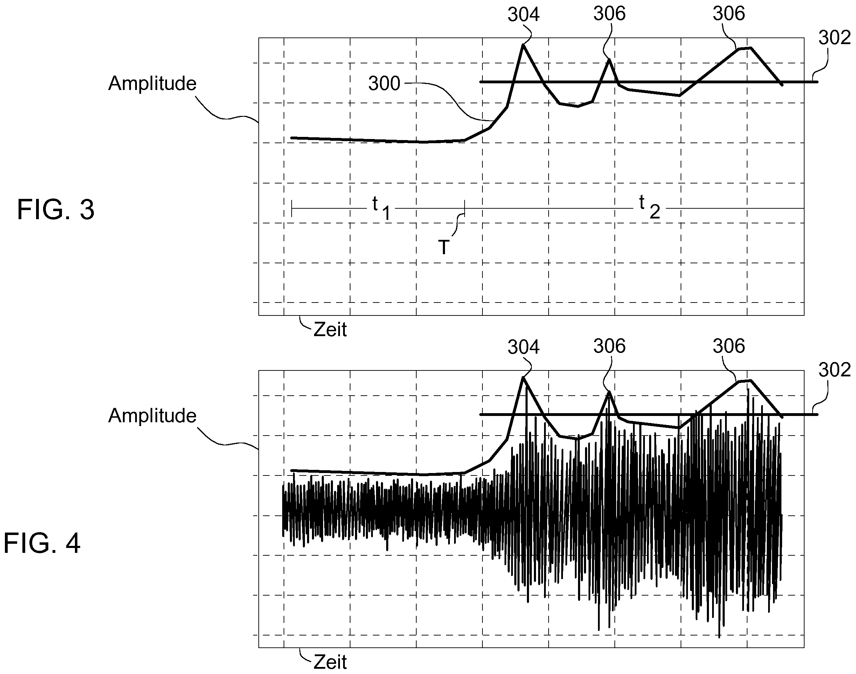

Figur 3 zeigt ein schematisches Darstellung des Verlaufs des Sensorsignals 300 vor und während des Wickelvorgangs. Figur 4 zeigt ein Darstellung des Verlaufs des Sensorsignals 300 vor und während des Wickelvorgangs. Das in den Figuren 3 und 4 gezeigte Sensorsignal entspricht im Wesentlichen dem in den Figuren 1 und 2 offenbarte Sensorsignal 300, sodass im Folgenden lediglich auf Details und/oder Unterschiede eingegangen wird. Das gezeigte Sensorsignal 300, kann das Sensorsignal des Sensors 148, insbesondere das Sensorsignal in Abhängigkeit von der Zeit sein oder des repräsentierende Modells, insbesondere eine Funktion, des Sensorsignal in Abhängigkeit von der Zeit sein. In einem Zeitabschnitt t₁ liegt das Sensorsignal 300 unterhalb des Schwellwertes 302. Es wird nur der Schall erfasst, der beispielsweise durch Vibrationen, insbesondere der Ballenpresse, verursacht wird. Ab dem Zeitpunkt T beginnt ein weiterer Zeitabschnitt t₂, dem der Wickelvorgang entspricht. Ab diesem Zeitpunkt T steigt die Amplitude des Sensorsignals 300 an. Die erste Amplitude 304 kann beispielsweise dem Zeitpunkt des Einführens des Wickelmaterial in die Presskammer entsprechen und/oder dem ersten Umwicklungsdurchgang. Die weiteren Amplituden 306 können weitere Umwicklungsdurchgänge sein. Die erste und die weiteren Amplituden 304, 306 liegen über dem Schwellwert 302.

## Patentansprüche

1. Ballenpresse, umfassend:
eine Presskammer (112) zum Pressen eines Ernteguts zu einem Ballen (200),
eine Wickeleinrichtung (146) zum Umwickeln des Ballens (200) mit einem Wickelmaterial während eines Wickelvorgangs,
einen Sensor (148) zur Erfassung eines Schallsignals,
eine mit dem Sensor (148) verbundene Steuereinheit (60), **dadurch gekennzeichnet, dass** die Steuereinheit (60) konfiguriert ist, den Wickelvorgang anhand eines Sensorsignals (300) des Sensors (148) zu charakterisieren.

2. Ballenpresse nach Anspruch 1, **dadurch gekennzeichnet, dass** die Steuereinheit (60) konfiguriert ist, eine Amplitude (304, 306) und/oder Frequenz des Sensorsignals (300) zu ermitteln, und den Wickelvorgang mit der Amplitude (304, 306) und/oder der Frequenz zu charakterisieren.

3. Ballenpresse nach Anspruch 1 oder 2, **dadurch gekennzeichnet, dass** die Steuereinheit (60) konfiguriert ist die Amplitude (304, 306) und/oder die Frequenz des Sensorsignals (300) mit einem Schwellwert (302) zu vergleichen.

4. Ballenpresse nach einem der vorangehenden Ansprüche, **dadurch gekennzeichnet, dass** das Schallsignal in Abhängigkeit von der Zeit erfassbar ist, und/oder die Steuereinheit (60) konfiguriert ist, den Wickelvorgang anhand eines Sensorsignals (300) des Sensors in Abhängigkeit von der Zeit zu charakterisieren, und/oder die Steuereinheit (60) konfiguriert ist die Amplitude (304, 306) des Sensorsignals (300) in Abhängigkeit von der Zeit zu ermitteln, und/oder die Amplitude (304, 306) des Sensorsignals (300) in Abhängigkeit von der Zeit mit dem Schwellwert (302) zu vergleichen.

5. Ballenpresse nach einem der vorangehenden Ansprüche, **dadurch gekennzeichnet, dass** die Steuereinheit (60) konfiguriert ist, das Sensorsignal (300) zu filtern und/oder zu bearbeiten.

6. Ballenpresse nach einem der vorangehenden Ansprüche, **dadurch gekennzeichnet, dass** die Steuereinheit (60) konfiguriert ist in Abhängigkeit vom Sensorsignal (300), insbesondere von einer Amplitude (304, 306) und/oder der Anzahl der Amplituden (304, 306) über dem Schwellwert (302), ein Fehlersignal oder ein Fertigstellungssignal zu generieren und/oder zu versenden.

7. Ballenpresse nach einem der vorangehenden Ansprüche, **dadurch gekennzeichnet, dass** der Sensor (148) an der Presskammer (112) oder der Wickeleinrichtung (146) oder einem Ballenpressenrahmen (114) der Ballenpresse (12) angeordnet ist.

8. Ballenpresse nach einem der vorangehenden Ansprüche, **dadurch gekennzeichnet, dass** der Sensor (148) ein Schallsensor, insbesondere ein Mikrophon oder ein Ultraschallsensor ist.

9. Ballenpresse nach einem der vorangehenden Ansprüche, **dadurch gekennzeichnet, dass** die Steuereinheit (60) konfiguriert ist, den Wickelvorgang anhand eines den Wickelvorgang repräsentierenden Modells in Abhängigkeit vom Sensorsignals (300) des Sensors (148), insbesondere vom den Sensorsignal (300) in Abhängigkeit von der Zeit zu charakterisieren.

10. Verfahren zum Betreiben einer Ballenpresse (12), insbesondere einer Ballenpresse (12) nach mindestens einem der Ansprüche 1 bis 9.

11. Verfahren nach Anspruch 10, umfassend die Schritte:
Wickeln eines Ballens (200) mit einem Wickelmaterial in einem Wickelvorgang mit einer Wickeleinrichtung (146),
Erfassung eines Schallsignals durch einen Sensor (148),
**dadurch gekennzeichnet, dass**
der Wickelvorgang mit einem Sensorsignal (300) des Sensors (148) charakterisiert wird.

12. Verfahren nach Anspruch 10 oder 11, **dadurch gekennzeichnet, dass** eine Amplitude (304, 306) des Sensorsignals (300) ermittelt wird, und der Wickelvorgang mit der Amplitude (304, 306) charakterisiert wird.

13. Verfahren nach einem der Ansprüche 10 bis 12, **dadurch gekennzeichnet, dass** die Amplitude (304, 306) des Sensorsignals (300) mit einem Schwellwert (302) verglichen wird.
